# EUROPÄISCHE PATENTSCHRIFT

(11) **EP 4 230 380 B1**
(45) Veröffentlichungstag und Bekanntmachung des Hinweises auf die Patenterteilung: **03.04.2024**
(21) Anmeldenummer: 23157656.2
(22) Anmeldetag: 20.02.2023
(51) Int. Cl.: B29C 48/335, B29C 48/49, B29C 48/70, B29C 48/09, B29C 48/21

(54) **COEXTRUSIONSWERKZEUG ZUR HERSTELLUNG MEHRSCHICHTIGER, SCHLAUCHARTIGER VORFORMLINGE AUS THERMOPLASTISCHEM KUNSTSTOFF**
COEXTRUSION DIE FOR PRODUCING MULTI-LAYER TUBULAR PREFORMS MADE OF THERMOPLASTIC MATERIAL
OUTIL DE COEXTRUSION POUR LA FABRICATION DE PRÉFORMES TUBULAIRES MULTICOUCHES EN MATIÈRE THERMOPLASTIQUE

(30) Priorität: 21.02.2022 DE 102022104059
(43) Veröffentlichungstag der Anmeldung: 23.08.2023
(73) Patentinhaber: BBM Maschinenbau und Vertriebs GmbH, 33449 Langenberg (DE)
(72) Erfinder: Schulte, Felix, 33449 Langenberg (DE)
(74) Vertreter: Tarvenkorn, Oliver

(56) Entgegenhaltungen:
- EP-B1- 1 498 254
- CN-U- 201 761 055
- US-A- 4 152 104

## Beschreibung

Die Erfindung betrifft ein Coextrusionswerkzeug zur Herstellung mehrschichtiger, schlauchartiger Vorformlinge aus thermoplastischem Kunststoff, mit den Merkmalen des Oberbegriffs des Anspruchs 1.

Die Grundanforderung bei einem solchem Coextrusionswerkzeug für einen mehrschichtigen Vorformling besteht zum einen darin, dass sich in jeder Schicht über den Umfang gesehen gleiche, lokale Fließgeschwindigkeiten einstellen müssen, um die jeweilige Schicht in sich homogen zu halten, und zum anderen darin, dass auch die Fließgeschwindigkeiten aller Schichten untereinander zu synchronisieren sind, um so einen Vorformling mit konstanten Wanddickenverteilungen in allen Schichten zu erhalten. Das Problem besteht in den unterschiedlich langen Fließwegen von Teilströmen der Kunststoffschmelze, die schon nahe bei der Zulauföffnung direkt in den Ringspalt eintreten, und anderen Teilströmen, die erst bis zum diametralen Ende des Verteilerringkanals fließen sollen, um auch den rückwärtigen Umfangsbereich ausreichend zu versorgen. Damit alle Teilströme gleichzeitig den Ringspalt verlassen können und sich ein homogener, ringförmiger Schmelzefluss ergibt, der an seinem gesamten Umfang einheitliche Fließgeschwindigkeiten besitzt, müssen die auf kurzem Weg direkt in den Ringkanal geflossenen Teilströme durch Erhöhung des lokalen Fließwiderstands gebremst werden, wozu herkömmlich lediglich die Spaltweite als Anpassungsmittel zur Verfügung steht.

Ein gattungsgemäßes Coextrusionswerkzeug ist aus der EP 1 740 362 B1 bekannt. Dieses sieht einen Verteilerringkanal vor, der sich in einer Durchmesserebene entlang des Umfangs des Kegelstumpfabschnitts erstreckt. Vorgeschlagen wird, die lokalen Fließgeschwindigkeiten entlang des Umfangs dadurch zu beeinflussen, dass an dem Kegelstumpfabschnitt eine große Spaltweite im Bereich der Zulauföffnung und eine kleine Spaltweite an einem diametral gegenüberliegenden Punkt des Verteilerringkanals gegeben ist, während die Spaltweitenverteilung an dem sich unter dem Kegelstumpfabschnitt anschließenden Zylinderabschnitt genau umgekehrt ist. Nachteilig ist, dass sich dadurch an gleichen Winkelpositionen oben am Kegelstumpfabschnitt und unten am Zylinderabschnitt unterschiedliche Druckverhältnisse einstellen. Deren interner Ausgleich führt dazu, dass Schmelze nicht nur parallel zur Mittelachse entlang des Herzverteilerelements fließt, sondern dass sich auch Querströmungsanteile einstellen und sich damit ein Fließen schräg zur Mittelachse ergibt. Somit ist es schwierig, eine homogene und konstante Wanddickenverteilung über den Umfang in jeder Schicht zu erreichen.

Die DE 37 00 237 A1 zeigt ein Coextrusionswerkzeug, bei dem die jeweilige Ebene der Verteilerringkanäle geneigt in Bezug auf eine Mittelachse ausgerichtet ist. Zum tiefsten Punkt hin nimmt der Querschnitt ab. Damit wird zwar die Druckverteilung über die Länge Verteilerringkanäle verbessert. Problematisch bleibt jedoch das Zusammenfließen der beiden Teilströmungen. Diese treffen idealerweise am tiefsten Punkt zusammen. In der Praxis führen aber kleinste Druckabweichungen dazu, dass sich die Nahtstelle verschiebt und/oder die Fließfronten sich nicht vollständig zu einem homogenen Film vereinigen.

Die zuvor beschrieben Problematik bei den zusammentreffenden Fließfronten ergibt sich auch bei einem jeweils aus DE 37 06 171 A1 oder DE 37 04 698 A1 bekannten Coextrusionswerkzeug, bei dem die Verbesserung der Druckverhältnisse über die Länge des Fließwegs nicht nur über eine Neigung, sondern auch über eine Krümmung des Verteilerringkanals erreicht werden soll.

Gemäß DE 27 12 910 A1 wird vorgeschlagen, bei einem Coextrusionswerkzeug einen Verteilerringkanal mit konstantem Querschnitt vorzusehen. Die Verbesserung des Fließverhaltens soll dadurch erreicht werden, dass aus dem Verteilerringkanal heraus die Schmelze nicht direkt in Abzugsrichtung des Schmelzeschlauchs geleitet wird, sondern dass zunächst eine 90° Umlenkung nach oben in einen durchmesserreduzierten Fließkanal vorgenommen wird, woran sich eine 180° Umlenkung anschließt. Mit der mehrfachen Umlenkung sind aber hohe Druckverluste verbunden.

US 4152104A beschreibt einen sich axial erstreckenden Extruderkopf zur Herstellung eines thermoplastischen schlauchförmigen Elements. Das zu extrudierende Material wird zunächst in ein Paar von Verteilerringkanälen geführt, die axial voneinander beabstandet sind und schräg zur Achse verlaufen. Von den ersten Verteilerringkanälen gelangt das Material in einen axial verlängerten zweiten Verteilerringkanal. Ein dritter Verteilerringkanal, der sich quer zur Achse erstreckt, leitet das Material vom zweiten Verteilerringkanal in einen axial verlaufenden Zufuhrkanal, aus dem das Material durch ein Düsenende extrudiert wird. Maßnahmen, um über den Umfang der Fließkanäle die darin gegebenen lokalen Strömungsgeschwindigkeiten und Volumenströme zu vergleichmäßigen, sind nicht angegeben.

CN201761055U gibt eine fünfschichtige Rohrverbunddüse für einen Kunststoffextruder an. Für mehrere Schichten sind die Verteilerringkanäle gleich aufgebaut. Es ist nicht angegeben, ob und wie über den Umfang gleichmäßige lokalen Strömungsgeschwindigkeiten und Volumenströme der daraus abfließenden Kunststoffschmelze erreicht werden können.

In EP1498254B1 ist ein Extrusionskopf zur Herstellung von schlauch- oder rohrförmigen Vorformlingen aus thermoplastischem Kunststoff offenbart, der ebenfalls mehrere Verteilerringkanäle besitzt, wobei der Querschnitt wenigstens eines Verteilerringkanals von der Mündung des Zufuhrkanals in Strömungsrichtung betrachtet kontinuierlich abnimmt. Durch die Querschnittsverjüngung des Verteilerringkanals erfolgt eine Widerstandsverringerung an der betreffenden Stelle des Zulaufspalts, so dass über den Umfang des Zulaufspalts sowohl eine gleichmäßige Abströmgeschwindigkeit als auch eine gleichmäßige Volumenstromverteilung erzielt werden soll.

Die Aufgabe der Erfindung besteht somit darin, ein Coextrusionswerkzeug der eingangs genannten Art so zu verbessern, dass in jeder Schicht eine über den Umfang homogene und konstante Wanddickenverteilung erzielbar ist.

Diese Aufgabe wird durch ein Coextrusionswerkzeug mit den Merkmalen des Anspruchs 1 gelöst.

Die Erfindung führt zu einem optimiertem Fließverhalten der Kunststoffschmelze entlang des gesamten Umfangs des Ringkanals und zu einer gleichmäßigen Fließgeschwindigkeitsverteilung spätestens im Endbereich des Zylinderabschnitts, insbesondere aber schon beim Übergang vom Kegelstumpfabschnitt zum Zylinderabschnitt.

Dies wird nach der Erfindung insbesondere dadurch erreicht, dass der Verteilerringkanal von der Zulauföffnung ausgehend nach unten geneigt ist, wobei sich der geneigte Verteilerringkanal über den Kegelstumpfabschnitt erstreckt. Dies führt zu einer Abkürzung des Fließweges für diejenigen einzelnen imaginären Teilströme innerhalb der fließenden Kunststoffschmelze, auch Stromfäden genannt, die den weitesten Weg zurückzulegen haben, nämlich von der Zulauföffnung bis zum unteren Scheitelpunkt.

Nach der Erfindung führt die Neigung des Verteilerringkanals dazu, dass einzelne Anteile der im Bereich der Zulauföffnung in den Ringspalt eingetretenen Strömung den ganzen Kegelstumpfabschnitt entlang vertikal abfließen müssen, während die entfernt zum rückwärtigen Umfangsbereich fließenden Anteile schon während des Flusses durch den Verteilerringkanal bis ans untere Ende des Kegelstumpfabschnitts oder in die Nähe des Endbereichs gelenkt werden. Der Idee, durch eine Neigung des Fließkanals quasi eine Abkürzung einzurichten, stünde bei einer Ausbildung eines geneigten Verteilerringkanals an einem zylindrischen Abschnitt der Umstand entgegen, dass sich dieser verlängern würde, da die schiefe Ebene des Verteilerringkanals elliptisch wäre und sich somit der Umfang verlängern würde.

Da die Erfindung aber vorsieht, den Verteilerringkanal nicht senkrecht zur Längsachse, sondern in der Seitenansicht gesehen geneigt am Kegelstumpfabschnitt auszubilden, schrumpft der elliptische Durchmesser. Je größer der Kegelwinkel ist und je stärker die Neigung des Verteilerringkanals gegenüber der zur Mittelachse orthogonalen Durchmesserebene ist, desto mehr kann eine Verlängerung des Fließwegs bis zum unteren Scheitelpunkt vermieden werden. Je nach Kegelwinkel und Durchmesser kann sogar eine Verkürzung erreicht werden. Damit kommen Anteile der Schmelze auf einem Fließweg, der kürzer ist als bei einem Halbkreis eines konventionellen Verteilerringkanals in der Durchmesserebene, direkt im unteren Endbereich des Kegelstumpfabschnitts an.

Die Differenz zwischen den von den Teilströmungen jeweils zu vorderen und hinteren Abschnitten des Verteilerringkanals zurückzulegenden Strecken wird bereits deutlich verringert.

Über eine Spaltweitenanpassung werden dann die Teilströmungen im Bereich der Zulauföffnung mit nur kurzem Fließweg durch eine enge Spaltweite zusätzlich gebremst, während im Bereich des unteren Scheitelpunkts die Spaltweite am größten ist, so dass die dortigen Teilströmungen weitgehend ungehindert abfließen können. Die Spaltweitenanpassung wird in Relation zur Viskosität der verarbeiteten Kunststoffschmelze vorgenommen.

Wichtig ist auch, dass schon die Neigung des Verteilerringkanals zu einem unteren Scheitelpunkt dazu führt, dass ein ringförmiger Kanal nur im geometrischen, aber nicht im strömungstechnischen Sinn vorliegt. Vielmehr wird die Strömung nicht im Kreis geführt, sondern ist durch einen linken und einen rechten Ast des Verteilerringkanals bestimmt.

Am Ende des Zylinderabschnitts werden bei dem erfindungsgemäßen Coextrusionswerkzeug durch die verschiedenen beschriebenen Maßnahmen im Ergebnis über den Umfang gleiche Fließgeschwindigkeiten erzielt.

Vorzugsweise verjüngt sich der Fließkanalquerschnitt des Verteilerringkanals zum unteren Scheitelpunkt hin. Damit wird der durch Übertritt von dem Schmelze in den Ringkanal zunehmend reduzierte Volumenstrom im Verteilerringkanal kompensiert und der verbleibende Anteil wird beschleunigt.

Dieses optimierte Fließverhalten wird über im Durchmesser angepasste, aber prinzipiell gleich aufgebaute Herzverteiler in allen drei Fließkanälen des Coextrusionswerkzeugs erreicht, so dass damit ein mehrschichtiges, schlauchförmiges Vorprodukt mit homogener Wanddickenverteilung gefertigt werden kann.

Eine weitere vorteilhafte Ausführungsform sieht vor, den Verteilerringkanal nicht in einer Ebene verlaufen zu lassen, sondern den Verteilerringkanal im Verlauf seiner beiden seitlichen Äste, die zum unteren Scheitelpunkt führen, mit verschiedenen Krümmungsradien zu versehen. Stärkere Krümmungen an dem geneigten Verteilerringkanal führen zur Erhöhung der vertikalen Geschwindigkeitskomponente. Daher sind stärkere Krümmungen bevorzugt im Bereich der Scheitelpunkte vorgesehen, um dort das Zusammenfließen der Fließfronten zu verbessern.

Eine weitere bevorzugte Ausführungsform sieht vor, den Verteilerringkanal mit einem U-förmigen Querschnittsprofil mit zwei geraden, parallelen Flanken auszubilden. Dadurch steht im Verteilerringkanal ein größerer Strömungsquerschnitt mit reduziertem Strömungswiderstand zur Verfügung.

Besonders vorteilhaft ist dabei, den Profilquerschnitt des Verteilerringkanals im Bereich des unteren Scheitelpunkts so auszurichten, dass die Mittellinie des Profilquerschnitts senkrecht zur Mantelfläche des Kegelstumpfabschnitts ausgerichtet ist. Das bedeutet, dass der Umlenkwinkel für die Kunststoffschmelze, die aus dem Verteilerringkanal in den Kegelstumpfringkanal übertritt, nicht größer als 90° ist, während ohne diese Maßnahme eine Umlenkung um einen Winkel von 90° zuzüglich des Kegelwinkels stattfinden würde. Auch dadurch wird der Fließwiderstand in den Bereichen reduziert, wo eine lokal höhere Fließgeschwindigkeit benötigt wird, um gegenüber den nur auf kurzem Weg in den Ringkanal eingeflossenen Teilströmen aufzuholen. Der Eintrag von Scherenergie in die Schmelze an der Austrittskante des Verteilerringkanals wird dadurch ebenfalls reduziert.

Weiterhin sind vorzugsweise Knicke im Verteilerringkanal bei den beiden Scheitelpunkten vorgesehen.

Ein nach oben weisender Knick am oberen Scheitelpunkt wirkt als Strömungsteiler, um gleich große Volumenströme der Schmelze in den rechten und linken Ast des Verteilerringkanals zu leiten.

Ein Knick am unteren Scheitelpunkt dient dazu, die Schmelze vom Verteilerringkanal nur in den Kegelstumpfringkanal umzuleiten und zu verhindern, dass Teile davon entgegen der vorgesehenen Strömungsrichtung in den anderen Ast des Verteilerringkanals einfließen. Damit wird die bereits oben beschriebene, strömungstechnische Teilung des Verteilerringkanals in zwei Äste noch verstärkt.

Die Erfindung wird nachfolgend mit Bezug auf das in den Zeichnungen dargestellte Ausführungsbeispiel näher erläutert. Die Figuren zeigen im Einzelnen:
- Fig. 1: Teile eines Coextrusionswerkzeugs in Explosionsdarstellung;
- Fig. 2: das montierte Coextrusionswerkzeug im Schnitt;
- Fig. 3: eine perspektivische Illustration des von Schmelze durchströmbaren Raums an einem Herzverteilerelement;
- Fig. 4: den durchströmbaren Raum gemäß Figur 3 in seitlicher Ansicht;
- Fig. 5: die Fließgeschwindigkeitsverteilung an einem Herzverteilerelement in schematischer Seitenansicht; und
- Fig. 6: eine perspektivische Ansicht auf ein Herzverteilerelement mit zwei Detaildarstellungen.

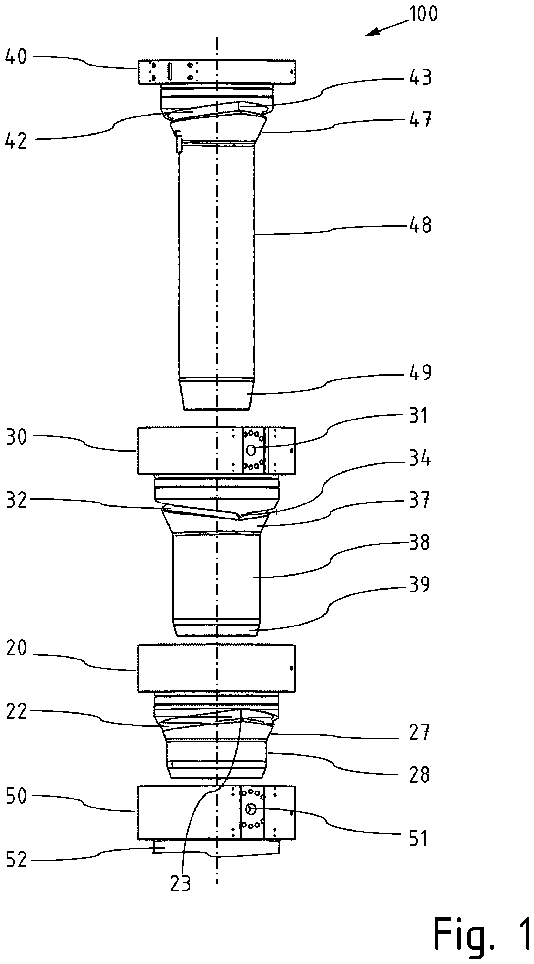

In Figur 1 sind Teile eines Coextrusionswerkzeugs 100 in Explosionsdarstellung gezeigt, das zur Herstellung dreischichtiger, schlauchartiger Vorformlinge aus thermoplastischem Kunststoff ausgebildet ist.

Ein Ringkolben 50 umfasst einen Kolbenabschnitt 52, mit dem er in einem ortsfest angeordneten Speichermantelelement verschiebbar gelagert ist. Darin einzusetzen sind drei Herzverteilerelemente 20, 30, 40 mit abgestuften Durchmessern. Das erste Herzverteilerelement 20 ist in den Ringkolben 50 einsetzbar. Es ist selbst auch ringförmig ausgebildet, so dass das zweite Herzverteilerelement 30 darin eingesetzt werden kann. Auch das Herzverteilerelement 30 ist ringförmig im Querschnitt, damit das dritte Herzverteilerelement 40 wiederum darin eingesetzt werden kann.

Jedes der Herzverteilerelemente 20, 30, 40 besitzt einen Kegelstumpfabschnitt 27, 37, 47, über dessen jeweiligen Umfang sich ein Verteilerringkanal 22, 32, 42 erstreckt. Unterhalb des Kegelstumpfabschnitts 27, 37, 47 setzen sich die Herzverteilerelemente 20, 30, 40 jeweils in einem Zylinderabschnitt 28, 38, 48 fort. Am unteren Ende schließen die Zylinderabschnitte 28, 38, 48 jeweils mit einem weiteren Kegelstumpfabschnitt 27, 37, 47 ab.

Jeder der Verteilerringkanäle 22, 32, 42 an den Herzverteilerelementen 20, 30, 40 erstreckt sich von einem oberen Scheitelpunkt, an dem die Kunststoffschmelze zuläuft, zu einem unteren Scheitelpunkt auf der Rückseite. In Figur 1 sind die oberen Scheitelpunkte 23, 43 des äußeren und inneren Herzverteilerelements 20, 40 sichtbar, während der untere Scheitelpunkt an der Rückseite verdeckt liegt. Im mittleren Herzverteilerelement 30 ist der untere Scheitelpunkt 34 sichtbar, während der obere Scheitelpunkt verdeckt ist.

Der Ringkolben 50 besitzt einen oberen Gehäuseabschnitt mit einer radialen Zulauföffnung 51, die bei montiertem Coextrusionswerkzeug 100 in Deckung mit dem oberen Scheitelpunkt 23 des Fließkanals 22 im äußeren Herzverteilerelement 20 positioniert ist, so dass der Fließkanal 22 über die Zulauföffnung 51 gespeist wird.

Das äußere Herzverteilerelement 20 besitzt ebenfalls eine periphere, hier nicht sichtbare Zulauföffnung, die sich radial nach innen erstreckt, um den Verteilerringkanal 32 am mittleren Herzverteilerelement 30 zu speisen.

Am mittleren Herzverteilerelement 30 ist eine Zulauföffnung 31 zur Versorgung des Verteilerringkanals 42 am inneren Herzverteilerelement 40 vorgesehen.

Bei diesem grundsätzlich bekannten Aufbau eines mehrschichtigen Coextrusionswerkzeugs 100 ist erfindungswesentlich, dass die Verteilerkanäle 22, 32, 42 jeweils nicht in einer Durchmesserebene verlaufen, sondern vom oberen zum unteren Scheitelpunkt hin abfallen. Jeder ringförmige Verteilerringkanal besitzt zwei Unstetigkeitsstellen und kann ansonsten stetig gekrümmt sein. Die Unstetigkeitsstellen befinden sich an den jeweiligen oberen und unteren Scheitelpunkten 23, 34, 43, an denen der Verteilerringkanal 22, 32, 42 jeweils einen Knick aufweist.

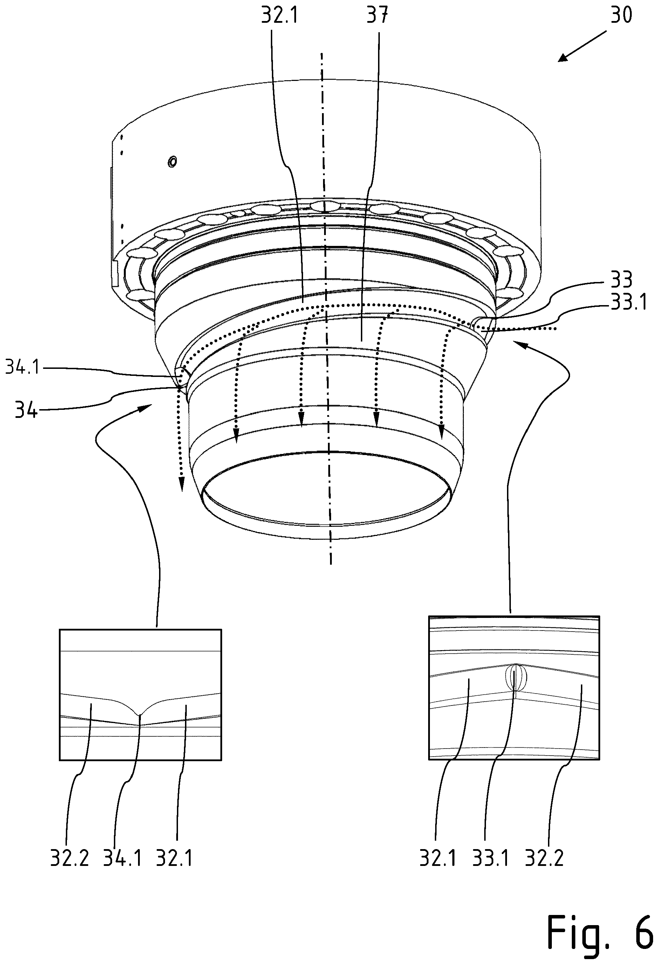

Anhand der perspektivischen Ansicht des mittleren Herzverteilerelements 30 in Figur 6 wird die besondere Ausbildung der Verteilerringkanäle nach der Erfindung näher erläutert.

Die Bezeichnung als "Verteileringkanal" ist eher geometrisch zu sehen, da kein echter Ring ausgebildet ist, sondern vielmehr zwei bogenförmige Fließkanäle vorgesehen sind, die ihren Beginn an derselben Zulauföffnung am oberen Scheitelpunkt 33 haben und die am diametral gegenüberliegenden Ende am unteren Scheitelpunkt 34 zumindest mit einem nur sehr kleinen Restquerschnitt verbunden sind. Im strömungstechnischen Sinn sind die Fließwege in je einen bogenförmigen Fließkanal 32.1, der sich vom oberen Scheitelpunkt 33 im Uhrzeigersinn nach links erstreckt, und einen bogenförmigen Fließkanal 32.2, der sich vom oberen Scheitelpunkt 33 gegen den Uhrzeigersinn nach rechts erstreckt, geteilt.

Bei der Zulauföffnung ist am oberen Scheitelpunkt 33 ein keilförmiges Strömungsteilerelement 33.1 ausgebildet, das sich radial nach außen erstreckt und den Kanalquerschnitt des Verteilerringkanals 32 zu einem großen Teil absperrt. Dadurch wird die Aufteilung der zufließenden Kunststoffschmelze in zwei Stränge erreicht. Ein Strang ist durch die punktierte Linie angedeutet.

Am unteren Scheitelpunkt 34 ist ein nasenförmiges Umlenkelement 34.1 ausgebildet, das sich von oben in den Querschnitt der Fließkanäle 32.1, 32.2 absenkt. Damit wird erreicht, dass die beiden Stränge aus den Fließkanälen 32.1, 32.2 heraus auf den Kegelstumpfabschnitt 37 umgelenkt werden. Der Restquerschnitt des Verteilerringkanals 32 ist unterhalb des Umlenkelements 34.1 auf wenigstens 50% desjenigen Querschnitts reduziert, der beidseits in der Nähe des unteren Scheitelpunkts 34 außerhalb des Umlenkelements 34.1 gegeben ist. Durch den kleinen Restquerschnitt bleibt ein Druckausgleich zwischen den beiden Fließkanälen 32.1, 32.2 möglich und das Zusammenfließen beider Stränge wird ermöglicht, wobei die Hauptströmungsrichtung jedoch abwärts, entlang des Kegelstumpfelements 37, gerichtet ist.

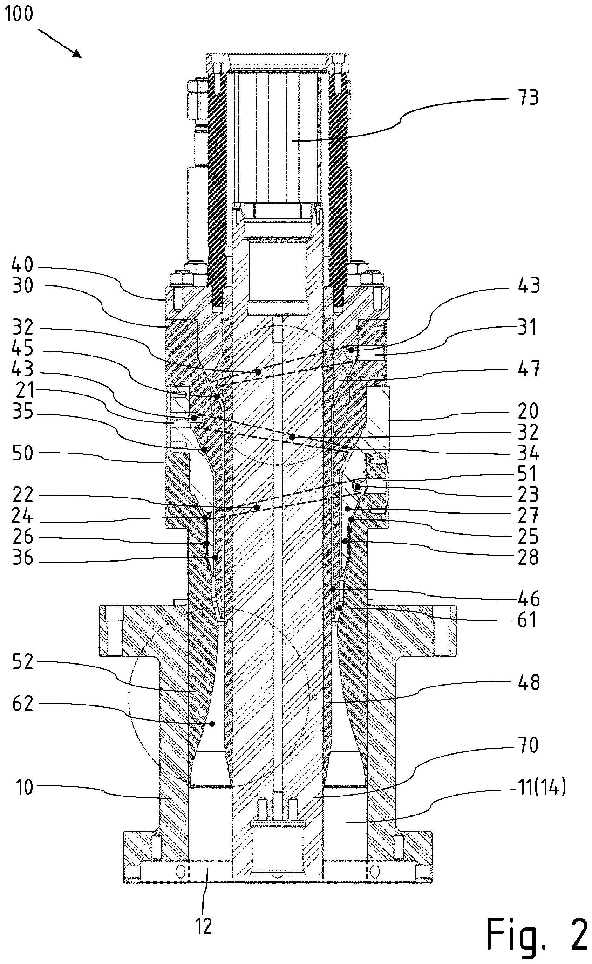

In Figur 2 ist das montierte Coextrusionswerkzeug 100 im Schnitt gezeigt. Au-ßen befindet sich das Speicherelement 10, das den unbeweglichen Teil des Werkzeugs bildet. Es besitzt einen großen Speicherraum 11, in welchem der Kolbenabschnitt 52 des Ringkolbens 50 verschiebbar geführt ist. Dadurch, dass dort eine Pinole 70 hineinragt, bildet sich zwischen dem Speicherelement 10 und der Pinole 70 ein Ringspeicherraum 14, der nach unten in einem Ausgabe-Ringkanal 12 endet. Die Pinole dient der axialen Führung des Ringkolbens 50 samt den darin eingesetzten Herzverteilerelementen 20, 30, 40.

Das Herzverteilerelement 20 ist in den Ringkolben 50 eingesetzt, wobei dessen Innenwandung im oberen Bereich jeweils parallel zur Außenwandung des Herzverteilerelements 20 ausgebildet ist. Gleiches gilt für die Innenkontur des Herzverteilerelements 20 und das darin eingesetzte Herzverteilerelement 30 sowie wiederum für dessen Innenkontur und das darin eingesetzte Herzverteilerelement 40.

Dadurch bildet sich zwischen einem der Kegelstumpfabschnitte 27, 37, 47 und der jeweiligen Innenwandung des benachbarten Elements ein Kegelstumpfringkanal 25, 35, 45. Daran schließt sich an den Zylinderabschnitten 28, 38, 48 je ein zylindrischer Ringkanalabschnitt 26, 36, 46 an.

Die Fließwege im Coextrusionswerkzeug 100 werden nachfolgend anhand der Figur 2 erläutert:
Kunststoffschmelze für je eine Schicht eines Vorformlings wird an den Zulauföffnungen 21, 31, 51 zugeführt. Sie fließt von dort auf den jeweiligen oberen Scheitelpunkt 23, 33, 43 des zugehörigen Verteilerringkanals 22, 32, 42 zu. Da die Verteilerkanäle 22, 32, 42 dort jeweils einen Knick aufweisen, so dass sich ein nach oben aufragender Steg bildet, wird die Kunststoffschmelze in zwei Stränge geteilt, von denen je einer im und einer gegen den Uhrzeigersinn im entsprechenden Abschnitt des Verteilerringkanals 22, 32, 42 fließt. Am unteren Scheitelpunkt 24 vereinigen sich die Stränge wieder.

Der Verteilerringkanal 22, 32, 42 liegt jedoch nicht dicht an der Innenwandung des benachbarte Bauteils an und ist daher nicht hermetisch abgeschlossen, so dass entlang des Verlaufs des Verteilerringkanals 22, 32, 42 bereits ein Teil der Kunststoffschmelze in den Kegelstumpfabschnitt 27, 37, 47 übertritt und der restliche Teil im Verteilerringkanal 22, 32, 42 weiterfließt. Der zum unteren Scheitelpunkt 24, 34, 44 hin abnehmende Volumenstrom wird durch einen sich in Richtung des unteren Scheitelpunkts 24, 34, 44 verjüngenden Querschnitt des Verteilerringkanals 22, 32, 42 kompensiert. Jede schlauchförmig fließende Kunststoffschmelze geht dann vom Kegelstumpfringkanal 25, 35, 45 in den zugehörigen zylindrischen Ringkanalabschnitt 26, 36, 46 über.

Die beiden äußeren Ringkanalabschnitte 26, 36 vereinigen sich als erste zu einem gemeinsamen Fließkanal 61. Dieser vereinigt sich anschließend mit dem Ringkanalabschnitt 46 der inneren Schicht zu einem gemeinsamen Fließkanal 62, in dem alle drei Schichten übereinander liegen. Der gemeinsamen Fließkanal 62 erweitert sich im Querschnitt und geht in den Ringspeicherraum 14 über, von wo der dreischichtige, schlauchförmige Strang über den Ausgabe-Ringkanal 12 ausgestoßen wird, indem der Ringkolben 50 axial verfahren wird.

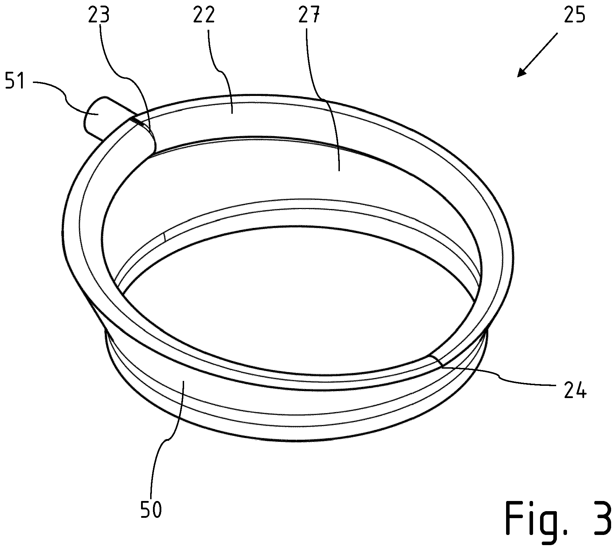

Figur 3 ist eine perspektivische Illustration des von Schmelze durchströmbaren Raums in Form des Kegelstumpfringkanals 25 mit dem zylindrischen Ringkanalabschnitt 26. Die zeichnerisch dargestellte Form entspricht einer Portion von Kunststoffschmelze, die zwischen einem der Herzverteilerelemente und dem benachbarten Bauteil eingefroren ist.

Dieser durchströmbare Raum wird am Innenumfang von den Wandungen des Herzverteilerelements 20 im Bereich des Verteilerringkanals 22 und des Kegelstumpfabschnitts 27 begrenzt. Nach außen wird der Raum durch die Innenwandung des Ringkolbenelements 50 begrenzt. Der Zulauf in den durchströmbaren Raum erfolgt über die Zulauföffnung 51. Man erkennt in Figur 3 bereits deutlich die Neigung beim Fließkanal 22 sowie die Knicke an den Scheitelpunkten 23, 24.

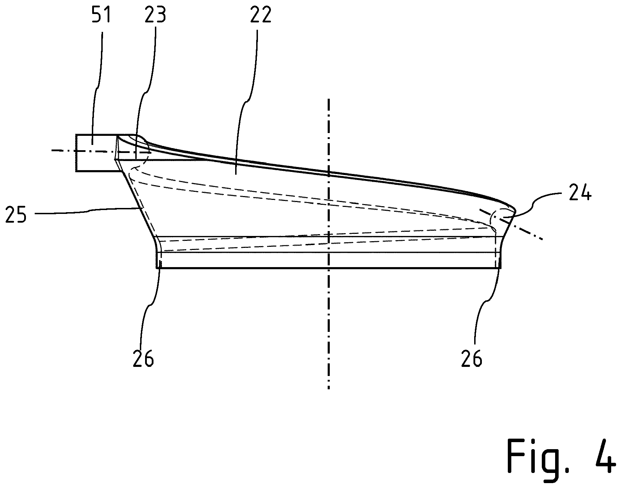

In Figur 4 ist der durchströmbare Raum für die erste, äußere Kunststoffschmelzeschicht am Herzverteilerelement 20 in seitlicher Ansicht mit verdeckten Linien dargestellt. Hierbei sind folgende Einzelheiten hervorzuheben:
- Die seitlichen Abschnitte des Verteilerringkanals 22 verlaufen zwischen dem oberen und dem unteren Scheitelpunkt 23, 24 nicht geradlinig, sondern mit stetiger Krümmung ohne Stufen oder weitere Knicke.
- Die Krümmung ist nahe der Scheitelpunkte stärker und dazwischen geringer.
- Der Verteilerringkanal 22 besitzt im Querschnitt ein U-Profil, das heißt, er setzt sich im Querschnitt aus einem zentralen halbkreisförmigen Profilabschnitt und zwei geradlinigen Flanken zusammen.
- Der Profilquerschnitt des Verteilerringkanals 22 ist entsprechend des Kegelwinkels im Kegelstumpfringkanal 25 ausgerichtet, das heißt, die Mittelachse des Profilquerschnitts steht in etwa senkrecht zur Kegelfläche.
- Die Breite des durchströmbaren Raums, also die Spaltweite, ist am Umfang beim oberen Scheitelpunkt 23 am kleinsten und am unteren Scheitelpunkt 24 am größten.

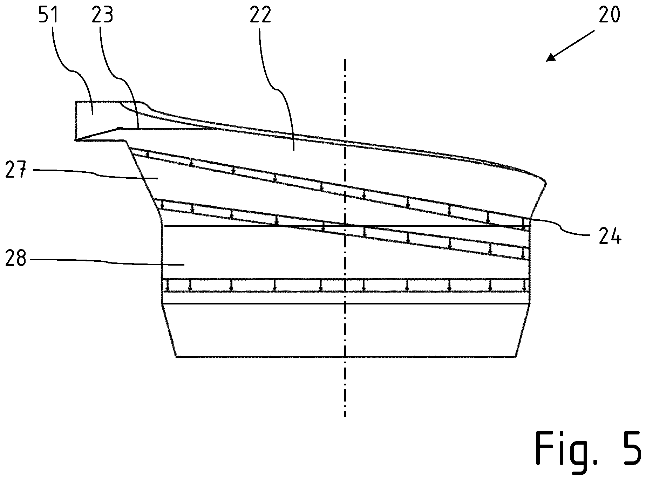

Die Effekte der nach der bevorzugten Ausführungsform der Erfindung vorgesehenen Maßnahmen:
- Neigung des Verteilerringkanals gegenüber einer Durchmesserebene,
- Profilquerschnittsform des Verteilerringkanals,
- Querschnittsneigung des Verteilerringkanals senkrecht zur Kegelfläche,
- unterschiedliche Spaltweitenverteilung am Umfang
sind in Figur 5 illustriert. Hierbei handelt es sich um eine seitliche Ansicht auf das Herzverteilerelement 20. Die drei übereinander gezeigten Bänder mit den Pfeilen kennzeichnen das Geschwindigkeitsprofil der Kunststoffschmelze an der jeweiligen Stelle.

Zu berücksichtigen ist, dass Teilströme, die direkt von der Zulauföffnung 51 in den Kegelstumpfringkanal 27 einfließen, einen kurzen Weg zurücklegen, während Teilströme, die von einem der beiden Verteilerringkanalabschnitte bis zum unteren Scheitelpunkt fließen, den längsten Weg zurücklegen. Die erfindungsgemäße Neigung des Verteilerringkanals hat den Vorteil, dass der Fließweg im rückwärtigen Bereich, zum unteren Scheitelpunkt hin, gegenüber einer herkömmlichen Ausbildung eines Verteilerringkanals deutlich verkürzt ist. Die Spaltweitenvariation ist daher ein Mittel, aber nicht das einzige Mittel, um die am Umfang lokal unterschiedlichen Strömungsgeschwindigkeiten anzupassen.

Wie in Figur 5 anhand des unteren Bandes veranschaulicht, sind die lokalen Fließgeschwindigkeiten im Endbereich des Zylinderabschnitts 28 über den Umfang gleichmäßig, wodurch sich ein gleichmäßiger Austritt des noch weichen Vorformlings aus dem Coextrusionswerkzeug ergibt.

### Bezugszeichenliste

- 100: Coextrusionswerkzeug

- 10: Speicherelement
- 11: Speicherraum
- 12: Ausgabe-Ringkanal
- 14: Ringspeicherraum

- 20, 30, 40: Herzverteilerelemente
- 21, 31: Zuflussöffnung
- 22, 32, 42: Verteilerringkanal
- 32.1, 32.2: Fließkanäle
- 23, 33, 43: oberer Scheitelpunkt
- 33.1: Strömungsteilerelement
- 24, 34, 44: unterer Scheitelpunkt
- 34.1: Umlenkelement
- 25, 35, 45: Kegelstumpfringkanal
- 26, 36, 46: zylindrischer Ringkanal
- 27, 37, 47: Kegelstumpfabschnitt
- 28, 38, 48: Zylinderabschnitt
- 29, 39, 49: Kegelstumpfabschnitt

- 50: Ringkolben
- 51: Zuflussöffnung
- 52: Kolbenabschnitt

- 61, 62: gemeinsame Fließkanäle

- 70: Pinole

## Patentansprüche

1. Coextrusionswerkzeug (100) zur Herstellung mehrschichtiger, coextrudierter schlauchartiger Vorformlinge aus thermoplastischem Kunststoff, mit wenigstens:
- einem Speicherelement (10) mit einem inneren Speicherraum (11);
- einer Pinole (70), wobei zwischen der Pinole (70) und dem Speicherelement (10) ein Ringspeicherraum (14) ausgebildet ist, der in einem Ausgabe-Ringkanal (12) mündet,
- und einem gegenüber dem Speicherelement (10) axial verschiebbaren Extrusionskopf mit einem Ringkolben (50), in dem wenigstens zwei Herzverteilerelemente (20, 30, 40) koaxial angeordnet sind,
wobei zwischen dem Ringkolben (50) und dem benachbarten Herzverteilerelement (20) sowie zwischen je zwei Herzverteilerelementen (20, 30, 40) jeweils ein Fließkanal ausgebildet ist, der sich von einer Zuflussöffnung (21, 31, 51) zu einem Verteilerringkanal (22, 32, 42) erweitert und von dort als Kegelstumpfringkanal (27, 37, 47) in einen zylindrischen Ringkanal (26, 36, 46) übergeht,
**dadurch gekennzeichnet,**
- **dass** der Verteilerringkanal (22, 32, 42) einen bei der Zulauföffnung (21, 31, 51) gelegenen, oberen Scheitelpunkt (23, 33, 43) aufweist, vom dem aus sich je ein Ast des Verteilerringkanals (22, 32, 42) zu beiden Seiten des Herzverteilerelements (20, 30, 40) erstreckt;
- **dass** der Verteilerringkanal (22, 32, 42) gegenüber einer Durchmesserebene zu einem unteren Scheitelpunkt (24, 34, 44) hin abfällt, welcher im Kegelstumpfringkanal (25, 35, 45) liegt und an dem sich die beiden Äste des Verteilerringkanals (22, 32, 42) vereinigen.

2. Coextrusionswerkzeug (100) nach Anspruch 1, **dadurch gekennzeichnet, dass** der Verteilerringkanal (22, 32, 42) nicht-linear mit einer stetigen Krümmung zu dem unteren Scheitelpunkt (24, 34, 44) hin abfällt.

3. Coextrusionswerkzeug (100) nach Anspruch 1 oder 2, **dadurch gekennzeichnet, dass** der Verteilerringkanal (22, 32, 42) am unteren Scheitelpunkt (24, 34, 44) einen unteren Knick aufweist.

4. Coextrusionswerkzeug (100) nach einem der Ansprüche 1 bis 3, **dadurch gekennzeichnet, dass** der Verteilerringkanal (22, 32, 42) am oberen Scheitelpunkt (23, 33, 43) einen oberen Knick aufweist.

5. Coextrusionswerkzeug (100) nach einem der Ansprüche 1 bis 4, **dadurch gekennzeichnet, dass** der Querschnitt des Verteilerringkanals (22, 32, 42) in seinem Verlauf vom oberen Scheitelpunkt (23, 33, 43) zum unteren Scheitelpunkt (24, 34, 44) kleiner wird.

6. Coextrusionswerkzeug (100) nach einem der Ansprüche 1 bis 5, **dadurch gekennzeichnet, dass** der untere Scheitelpunkt (24, 34, 44) am Übergang zwischen dem Kegelstumpfringkanal (25, 35, 45) und dem zylindrischen Ringkanal (26, 36, 46) angeordnet ist.

7. Coextrusionsvorrichtung (100) nach Anspruch 6, **dadurch gekennzeichnet, dass** der Höhenversatz zwischen dem oberen Scheitelpunkt (23, 33, 43) und dem unteren Scheitelpunkt (24, 34, 44) im Verhältnis zum Durchmesser des zylindrischen Ringkanals (26, 36, 46) am Übergang so gewählt sind, dass eine Schnittebene zwischen dem Kegelstumpfringkanal (27, 37, 47) und dem zylindrischen Ringkanal (26, 36, 46) nicht parallel zu einer orthogonalen Durchmesserebene ausgerichtet ist.

8. Coextrusionswerkzeug (100) nach einem der Ansprüche 1 bis 7, **dadurch gekennzeichnet, dass** wenigstens ein Verteilerringkanal (22, 32, 42) im Herzverteilerelement (20, 30, 40) im Querschnitt als eine Nut mit einem U-Profil ausgebildet ist, das eine tief liegende, bogenförmige Krümmung und zwei gerade, zur Außenseite des Herzverteilerelements (20, 30, 40) auslaufende Flanken aufweist.

9. Coextrusionswerkzeug (100) nach einem der Ansprüche 1 bis 8, **dadurch gekennzeichnet, dass** die Mittelachse des Querschnittsprofils des Verteilerringkanals (22, 32, 42) im Bereich des unteren Scheitelpunkts (24, 34, 44) senkrecht zur Wandung im Kegelstumpfabschnitt (27, 37, 47) des Herzverteilerelements (20, 30, 40) ausgerichtet ist.

10. Coextrusionswerkzeug (100) nach einem der Ansprüche 1 bis 9, **dadurch gekennzeichnet, dass** bei der Zulauföffnung am oberen Scheitelpunkt (33) ein keilförmiges Strömungsteilerelement (33.1) ausgebildet ist, das sich radial nach außen erstreckt und dort den Kanalquerschnitt des Verteilerringkanals (22, 32, 42) absperrt, wodurch der Verteilerringkanal (22, 32, 42) in je einen bogenförmigen Fließkanal (32.1), der sich vom oberen Scheitelpunkt (33) im Uhrzeigersinn erstreckt, und in einen bogenförmigen Fließkanal (32.2), der sich vom oberen Scheitelpunkt (33) gegen den Uhrzeigersinn erstreckt, geteilt ist.

11. Coextrusionswerkzeug (100) nach Anspruch 10, **dadurch gekennzeichnet, dass** am unteren Scheitelpunkt (34) ein nasenförmiges Umlenkelement (34.1) ausgebildet ist, das sich von oben in den Querschnitt der Fließkanäle (32.1, 32.2) absenkt.

## Claims

1. Coextrusion tool (100) for producing multi-layered, coextruded, tubular preforms from thermoplastic material, comprising at least:
- a storage element (10) with an internal storage space (11);
- a sleeve (70), wherein an annular storage space (14) leading into an annular outlet channel (12) is formed between the sleeve (70) and the storage element (10),
- and an extrusion head which is axially displaceable with respect to the storage element (10) and comprises an annular piston (50), in which at least two core distribution elements (20, 30, 40) are coaxially disposed,
wherein a respective flow channel, which widens from an inflow opening (21, 31, 51) to an annular distribution channel (22, 32, 42) and from there, as frustoconical-ring channel (27, 37, 47), merges into a cylindrical-ring channel (26, 36, 46), is formed between the annular piston (50) and the adjacent core distribution element (20) and also between two respective core distribution elements (20, 30, 40),
**characterized in that**
- the annular distribution channel (22, 32, 42) has an upper vertex (23, 33, 43), which is placed at the inflow opening (21, 31, 51) and from which a respective branch of the annular distribution channel (22, 32, 42) extends on either side of the core distribution element (20, 30, 40);
- the annular distribution channel (22, 32, 42) drops with respect to a diameter plane to a lower vertex (24, 34, 44), which is in the frustoconical-ring channel (25, 35, 45) and at which the two branches of the annular distribution channel (22, 32, 42) meet.

2. Coextrusion tool (100) according to Claim 1, **characterized in that** the annular distribution channel (22, 32, 42) drops non-linearly, with a continuous curvature, to the lower vertex (24, 34, 44).

3. Coextrusion tool (100) according to Claim 1 or 2, **characterized in that** the annular distribution channel (22, 32, 42) has a lower kink at the lower vertex (24, 34, 44).

4. Coextrusion tool (100) according to one of Claims 1 to 3, **characterized in that** the annular distribution channel (22, 32, 42) has an upper kink at the upper vertex (23, 33, 43).

5. Coextrusion tool (100) according to one of Claims 1 to 4, **characterized in that** the cross section of the annular distribution channel (22, 32, 42) becomes smaller in its course from the upper vertex (23, 33, 43) to the lower vertex (24, 34, 44).

6. Coextrusion tool (100) according to one of Claims 1 to 5, **characterized in that** the lower vertex (24, 34, 44) is disposed at the transition between the frustoconical-ring channel (25, 35, 45) and the cylindrical-ring channel (26, 36, 46).

7. Coextrusion tool (100) according to Claim 6, **characterized in that** the vertical offset between the upper vertex (23, 33, 43) and the lower vertex (24, 34, 44) in relation to the diameter of the cylindrical-ring channel (26, 36, 46) at the transition is selected such that a sectional plane between the frustoconical-ring channel (27, 37, 47) and the cylindrical-ring channel (26, 36, 46) is not parallel to an orthogonal diameter plane.

8. Coextrusion tool (100) according to one of Claims 1 to 7, **characterized in that** at least one annular distribution channel (22, 32, 42) in the core distribution element (20, 30, 40) in cross section is in the form of a groove with a U profile which has a deep, arcuate curvature and two straight flanks running out to the outer side of the core distribution element (20, 30, 40).

9. Coextrusion tool (100) according to one of Claims 1 to 8, **characterized in that** the centre axis of the cross-sectional profile of the annular distribution channel (22, 32, 42) in the region of the lower vertex (24, 34, 44) is perpendicular to the wall in the frustoconical portion (27, 37, 47) of the core distribution element (20, 30, 40).

10. Coextrusion tool (100) according to one of Claims 1 to 9, **characterized in that**, at the inflow opening in the upper vertex (33), there is formed a wedge-shaped flow distributing element (33.1), which extends radially to the outside and there shuts off the channel cross section of the annular distribution channel (22, 32, 42), as a result of which the annular distribution channel (22, 32, 42) is subdivided into a respective arcuate flow channel (32.1) which extends clockwise from the upper vertex (33), and into an arcuate flow channel (32.2) which extends anticlockwise from the upper vertex (33).

11. Coextrusion tool (100) according to Claim 10, **characterized in that** a lug-shaped deflection element (34.1), which drops from above into the cross section of the flow channel (32.1, 32.2), is formed on the lower vertex (34).

## Revendications

1. Outil de coextrusion (100) destiné à produire des préformes tubulaires coextrudées multicouches en matière synthétique thermoplastique, ledit outil de coextrusion comprenant au moins :
- un élément de stockage (10) pourvu d'un espace de stockage intérieur (11) ;
- une torpille (70), un espace de stockage annulaire (14), qui débouche dans un conduit de sortie annulaire (12), étant ménagé entre la torpille (70) et l'élément de stockage (10),
- une tête d'extrusion qui est déplaçable axialement par rapport à l'élément de stockage (10) et qui comporte un piston annulaire (50) dans lequel au moins deux éléments de distribution de coeur (20, 30, 40) sont disposés coaxialement, un conduit d'écoulement étant formé entre le piston annulaire (50) et l'élément de distribution de coeur adjacent (20) et entre deux éléments de distribution de coeur (20, 30, 40), qui s'étend depuis une ouverture d'entrée (21, 31, 51) jusqu'à un conduit de distribution annulaire (22, 32, 42) et qui se transforme ensuite en un conduit annulaire cylindrique (26, 36, 46) sous la forme d'un conduit annulaire tronconique (27, 37, 47),
**caractérisé en ce que**
- le conduit de distribution annulaire (22, 32, 42) comporte un sommet supérieur (23, 33, 43) qui est situé au niveau de l'ouverture d'entrée (21, 31, 51) et à partir duquel une branche du conduit de distribution annulaire (22, 32, 42) s'étend des deux côtés de l'élément de distribution de coeur (20, 30, 40) ;
- le conduit de distribution annulaire (22, 32, 42) descend par rapport à un plan de diamètre jusqu'à un sommet inférieur (24, 34, 44) qui est situé dans le conduit annulaire tronconique (25, 35, 45) et au niveau duquel les deux branches du conduit de distribution annulaire (22, 32, 42) s'unissent.

2. Outil de coextrusion (100) selon la revendication 1, **caractérisé en ce que** le conduit de distribution annulaire (22, 32, 42) descend de manière non linéaire avec une courbure continue vers le sommet inférieur (24, 34, 44).

3. Outil de coextrusion (100) selon la revendication 1 ou 2, **caractérisé en ce que** le conduit de distribution annulaire (22, 32, 42) comporte un coude inférieur au niveau du sommet inférieur (24, 34, 44).

4. Outil de coextrusion (100) selon l'une des revendications 1 à 3, **caractérisé en ce que** le conduit de distribution annulaire (22, 32, 42) comporte un coude supérieur au niveau du sommet supérieur (23, 33, 43).

5. Outil de coextrusion (100) selon l'une des revendications 1 à 4, **caractérisé en ce que** la section transversale du conduit de distribution annulaire (22, 32, 42) devient de plus en plus petit dans son tracé allant du sommet supérieur (23, 33, 43) au le sommet inférieur (24, 34, 44).

6. Outil de coextrusion (100) selon l'une des revendications 1 à 5, **caractérisé en ce que** le sommet inférieur (24, 34, 44) est disposé au niveau de la transition entre le conduit annulaire tronconique (25, 35, 45) et le conduit annulaire cylindrique (26, 36, 46).

7. Dispositif de coextrusion (100) selon la revendication 6, **caractérisé en ce que** le décalage en hauteur entre le sommet supérieur (23, 33, 43), et celui entre le sommet inférieur (24, 34, 44), et le diamètre du conduit annulaire cylindrique (26, 36, 46) sont sélectionnés au niveau de la transition de telle sorte qu'un plan de coupe entre le conduit annulaire tronconique (27, 37, 47) et le conduit annulaire cylindrique (26, 36, 46) ne soit pas orienté parallèlement à un plan de diamètre orthogonal.

8. Outil de coextrusion (100) selon l'une des revendications 1 à 7, **caractérisé en ce qu'**au moins un conduit de distribution annulaire (22, 32, 42) dans l'élément de distribution de coeur (20, 30, 40) est conçu en section transversale comme une rainure ayant un profil en U, qui présente une incurvation basse en force d'arc et deux flancs droits qui s'étendent vers le côté extérieur de l'élément de distribution de coeur (20, 30, 40).

9. Outil de coextrusion (100) selon l'une des revendications 1 à 8, **caractérisé en ce que** l'axe central du profil en coup transversale du conduit de distribution annulaire (22, 32, 42) au niveau du sommet inférieur (24, 34, 44) est orienté perpendiculairement à la paroi dans la portion tronconique (27, 37, 47) de l'élément de distribution de coeur (20, 30, 40).

10. Outil de coextrusion (100) selon l'une des revendications 1 à 9, **caractérisé en ce qu'**un élément de division d'écoulement (33.1) en forme de coin est formé au niveau de l'ouverture d'entrée au niveau du sommet supérieur (33), lequel élément de division d'écoulement s'étend radialement vers l'exteneur puis la section transversale du conduit de distribution annulaire (22, 32, 42), ce qui divise le conduit de distribution annulaire (22, 32, 42) en un conduit d'écoulement incurvé (32.1) qui s'étend dans le sens horaire depuis le sommet supérieur (33) et en un conduit d'écoulement incurvé (32.2) qui s'étend dans le sens antihoraire depuis le sommet supérieur (33).

11. Outil de coextrusion (100) selon la revendication 10, **caractérisé en ce qu'**un élément de déviation en forme de mentonnet (34.1) est formé au niveau du sommet inférieur (34), lequel élément de déviation descend depuis le haut jusque dans la section transversale des conduits d'écoulement (32.1, 32.2).
